# EUROPÄISCHE PATENTANMELDUNG

(11) **EP 0 965 825 A2**
(43) Veröffentlichungstag der Anmeldung: **22.12.1999**
(21) Anmeldenummer: 99250190.8
(22) Anmeldetag: 15.06.1999
(51) Int. Cl.: G01J 3/46

(54) **Vorrichtung zur Farbabmusterung oder Farbmessung**

(30) Priorität: 15.06.1998 DE 19826533
(71) Anmelder: DR. ING. WILLING GMBH, D-96110 Schesslitz (DE)
(72) Erfinder: Willing, Achim, 96110 Schesslitz/Burgellern (DE)
(74) Vertreter: Pfenning, Meinig & Partner

(57) **Zusammenfassung**

Es wird eine Vorrichtung zur Farbabmusterung oder Farbmessung von farbigen Proben, die in einer Probenhalterung angeordnet sind, vorgeschlagen. Sie weist eine die Probe in einer Hauptstrahlrichtung beleuchtenden Beleuchtungseinrichtung und einen an einer Beobachtungsposition vorgesehenen Beobachter oder eine an einer Beobachtungsposition angeordneten Meßeinrichtung auf, wobei die Probe und Beobachtungsposition eine ortsfeste Zuordnung zueinander aufweisen. Die Probe und die Beleuchtungseinrichtung sind in fester Zuordnung zueinander angeordnet und zur Einstellung unterschiedlicher Beobachtungswinkel zwischen Beobachtungsrichtung von der Beobachtungsposition zur Probe und Hauptstrahlrichtung sind die Probe und die Beleuchtungseinrichtung um eine gemeinsame Drehachse schwenkbar sind.

## Beschreibung

Die Erfindung betrifft eine Vorrichtung zur Farbabmusterung oder Farbmessung von farbigen Proben nach dem Oberbegriff des Hauptanspruchs.

Es sind Vorrichtungen zur Farbmessung und Vorrichtungen zur Farbabmusterung bekannt, wobei diese Vorrichtungen jeweils prinzipiell unterschiedlich aufgebaut sind, so daß eine Übereinstimmung zwischen der Farbmessung und dem visuellen Farbeindruck wegen der unterschiedlichen Geometrien oft nicht erreicht wird.

Bei der üblichen Farbmessung wird von einer relativ zum Meßgerät feststehenden Probe ausgegangen, die aus verschiedenen definierten Winkeln beleuchtet und meist senkrecht zur Oberfläche beobachtet wird. Bei diesen Vorrichtungen werden die Geräte in unmittelbarer Nähe der Oberfläche angeordnet und es werden nur sehr kleine Oberflächenanteile beobachtet.

Zur Farbabmusterung kleinerer Proben, z.B im DIN A4 Format, sind kleine Beleuchtungskabinen, z.B. auf Tischen angeordnete Kabinen üblich, in denen eine stationäre Beleuchtung zur Bestrahlung der Proben angebracht ist. Um die unterschiedlichen Farbeffekte zu erkenne, werden die Probenoberflächen einem Beobachter unter unterschiedlichen Winkeln präsentiert und somit auch aus jeweils unterschiedlichen Winkeln beleuchtet. Aus der EP 0 379 168 A2 ist eine derartige Abmusterungskammer bekannt. Bei dieser bekannten Abmusterungskammer besteht der Nachteil einer schlechten Reproduzierbarkeit, weil sowohl die Beleuchtungswinkel als auch die Beobachtungswinkel sich in verschiedenen Beobachtungssituationen ändern, insbesondere Farbeffekte sind schwer zu erkennen.

Aufgabe der Erfindung ist es daher, eine Vorrichtung zur Farbabmusterung oder Farbmessung zu schaffen, die eine Farbabmusterung bzw. Farbmessung mit guter Reproduzierbarkeit und eindeutig definierten unterschiedlichen Beleuchtungs- und Beobachtungsbedingungen ermöglicht und mit der auch Farbeffekte gut erkannt werden können.

Diese Aufgabe wird erfindungsgemäß durch die Merkmale des Hauptanspruchs gelöst.

Entsprechend der Erfindung wird die zu inspizierende bzw. zu messende Probe und die die Probe beleuchtende Beleuchtungseinrichtung in fester geometrischer Relation zueinander angeordnet, wobei die feste geometrische Relation auch bei einer Schwenkung der Probenoberfläche zur Einstellung unterschiedlicher Beobachtungswinkel erhalten bleibt. Dies kann durch eine mit der oder den Proben bzw. mit dem Probenhalter fest verbundene Beleuchtungseinrichtung erreicht werden, die jede Schwenkung und Bewegung der Probe aufgrund der starren Verbindung mitmacht und dadurch immer gleichbleibende Beleuchtungsverhältnisse auch bei veränderten Beobachtungswinkeln bewirkt.

Vorzugsweise wird die Beleuchtungseinrichtung so dimensioniert und positioniert, daß die Probe aus Winkeln gleich oder größer als 45° zu ihrer Normalen beleuchtet wird. Dies kann mit punktförmigen, d.h. in der Praxis kompakten Lichtquellen geschehen, es hat sich jedoch gezeigt, daß sich besonders hohe Korrelationen bzw. Übereinstimmungen zu den Abmusterungen, die im Freien, d.h. bei Tageslicht durchgeführt wurden, bei Verwendung linienförmiger bzw. röhrenförmiger Lichtquellen ergeben haben.

Ein besonders großer Vorteil liegt darin, daß die Vorrichtung sowohl zur Farbmusterung als auch zur Farbmessung verwendet werden kann, wobei der Aufbau gleichbleibt und lediglich der visuelle Beobachter durch ein Farbmeßgerät bzw. durch entsprechende Empfänger des Farbmeßgerätes ersetzt wird, die die Strahldichte der Probe spektral bewerten.

Die Lampen bzw. die Leuchten gegebenenfalls mit entsprechender Filterung werden insbesondere zur visuellen Abmusterung so ausgewählt, daß ihre spektrale Verteilung den vorgegebenen Abmusterungsbedingungen entspricht, z.B. einer Farbtemperatur von 6500 Kelvin und ausreichend großem Metamerieindex zum Tageslicht. Dafür sind entsprechend ausgewählte Leuchtstofflampen geeignet.

Als besonders effizient haben sich Beobachtungswinkel ergeben, die durch den winkelmäßigen Abstand zur Hauptstrahlrichtung der Beleuchtung definiert werden können, beispielsweise 25°, 45° und 75°.

Vorteilhafterweise können für eine Untersuchung von Proben auf Metamerie Leuchten mit verschiedenen spektralen Lichtverteilungen vorgesehen sein, die durch eine Dreh- oder Schwenkvorrichtung miteinander verbunden sind, wobei die jeweilige ausgewählte Lampe über die Drehung oder Schwenkung in die jeweilige Sollposition gebracht wird.

Ausführungsbeispiele der Erfindung sind in der Zeichnung dargestellt und werden in der nachfolgenden Beschreibung näher erläutert. Es zeigen
- Fig. 1: einen vertikalen Schnitt durch ein Ausführungsbeispiel der vorliegenden Erfindung,
- Fig. 2: eine schematische perspektivische Ansicht der Vorrichtung nach Fig. 1,
- Fig. 3: eine schematische Darstellung der Beleuchtung einer Probe und Betrachtung derselben bei unterschiedlichen Beobachtungswinkeln,
- Fign. 4 bis 6: Darstellungen entsprechend Fig. 3 bei unterschiedlichen Beobachtungswinkeln aber gleicher Beobachtungsrichtung und
- Fig. 7: eine Beleuchtungseinrichtung entsprechend einem weiteren Ausführungsbeispiel.

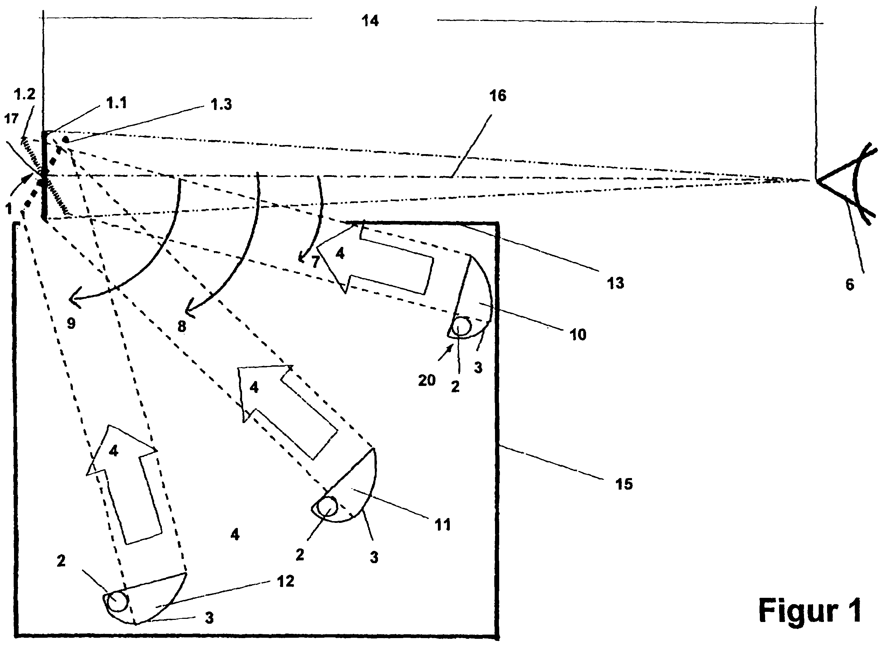

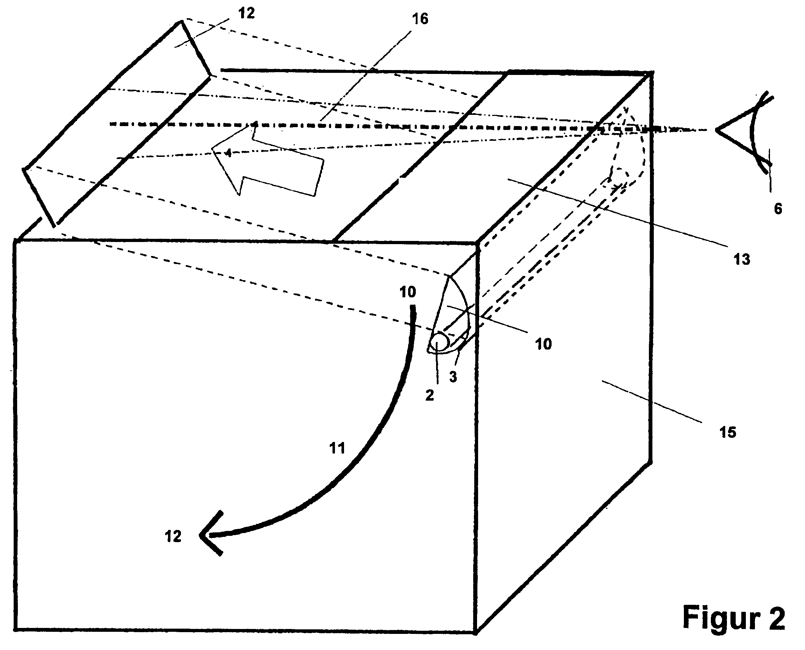

Die in Fig. 1 und Fig. 2 dargestellte Vorrichtung zur Messung und/oder visuellen Abmusterung von Farben und/oder Farbeffekten einer farbigen Probe weist ein Gehäuse 15 auf, das beispielsweise als Tischkasten ausgebildet ist und in dem eine Beleuchtungseinrichtung 20 untergebracht ist. Die Beleuchtungseinrichtung 20 sendet ein Lichtbündel 4 aus, das auf eine Probe 1 mit farbiger Beschichtung oder Lackierung oder dgl. gerichtet ist, die relativ klein ist und beispielsweise in einer Größenordnung von DIN A4 liegen kann. Die Probe, die durch das Lichtbündel 4 unter einem schrägen Winkel, vorzugsweise unter etwa 45° beleuchtet wird, ist in einem nicht dargestellten Probenhalter aufgenommen und fixiert. Die Beleuchtungsvorrichtung weist eine Lampe, im dargestellten Ausführungsbeispiel eine langgestreckte Leuchtstofflampe und einen lichtbündelnden Reflektor 3 auf. Wie aus Fig. 2 zu erkennen ist, ist der Reflektor 3 rinnenförmig ausgebildet. Die Probe 1 liegt im dargestellten Ausführungsbeispiel außerhalb des Gehäuses oder Tischkastens 15, der zumindest teilweise nach oben offen ist, damit das Lichtbündel 4 die Probe 1 bestrahlen kann.

Mit 6 ist eine Beobachtungsposition bezeichnet, die in einer vorgegebenen Entfernung 14 von der Probe 1 beispielsweise einer Leseentfernung von 600 mm oder größer angeordnet ist. An der Beobachtungsposition 6 befindet sich entweder ein Beobachter oder ein Farbmeßgerät. Für den Zweck der Beobachtung ist von der Beobachtungsposition 6 zur Probe 1 ein Strahlengang oder kegelförmiger Kanal 16 freigehalten, um eine freie Beobachtung zu ermöglichen. Der Blick eines Beobachters an der Beobachtungsposition 6, aber auch der Empfänger vom Farbmeßgerät, ist durch mindestens eine Blende 13 von der Beleuchtungseinrichtung 20 abgeschirmt, so daß Umadaptionen durch Blendung verhindert werden. Die Beobachtungsposition 6 und die Probe 1 weisen eine ortsfeste Zuordnung zueinander auf, wobei ein Beobachter durch ein nicht dargestelltes Okular hindurch sehen kann oder über einen Anschlag oder dergleichen Hilfsmittel eine feste Entfernung einhalten kann. Es ist auch eine freie Beobachtung möglich, insbesondere bei trainiertem Personal. Selbstverständlich kann der kegelförmige Kanal durch entsprechende nicht dargestellte Kanalwände begrenzt und Bestandteil de Gehäuses sein.

Die Probe 1 ist um eine körperliche oder fiktive Drehachse 17 schwenkbar, wobei in der Prinzipdarstellung nach Fig. 1 diese Drehachse die horizontale Mittelachse der Probe 1 ist, wobei unter fiktiver Drehachse verstanden wird, daß die Drehung der Probenhalterung über eine außerhalb der Probe angebrachten körperlichen Drehvorrichtung realisiert ist. In der tatsächlichen Realisierung könnte sich die Drehachse 17 etwas außerhalb der Probe befinden, sie sollte jedoch so nahe wie möglich an der Probe 1 liegen.

Die Beleuchtungseinrichtung bzw. Leuchte 20 ist derart fest mit der Probe 1 bzw. dem Probenhalter verbunden, daß sie zusammen mit der Probe um die Drehachse 17 geschwenkt wird, d.h. Probe 1 und Beleuchtungseinrichtung 20 befinden sich in fester Zuordnung zueinander und werden gemeinsam um die Drehachse 17 geschwenkt. In der Fig. 1 sind drei verschiedene Stellungen der Beleuchtungseinrichtung, nämlich die Position 10, 11 und 12 und entsprechend drei verschiedene Stellungen der Probe 1, nämlich 1.2, 1.1 und 1.3 dargestellt. Die unterschiedlichen Beobachtungswinkel sind mit 7, 8 und 9 bezeichnet. Dadurch kann sowohl die Farbe auf der Probe 1 erkannt werden als auch den unterschiedlichen Beobachtungswinkeln 7, 8, 9 zugeordnete Effekte.

In Fig. 2 ist die Anordnung nach Fig. 1 perspektivisch dargestellt, wobei hier nur eine Stellung der Beleuchtungseinrichtung 20 und der Probe 1 dargestellt ist, nämlich die Positionen 10 und 1.2.

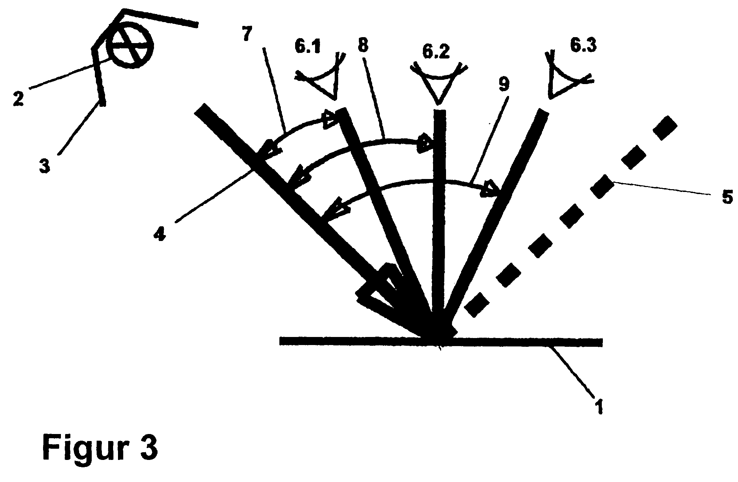

In Fig. 3 sind die verschiedenen Einfalls-, Ausfalls- und Beobachtungsrichtungen schematisch in einer Figur dargestellt, wobei die Probe als Horizontale gezeigt ist und die Beobachtungsrichtungen unterschiedlich dargestellt sind. Die Probe wird von dem von der Lampe 2 und dem lichtbündelnden Reflektor 3 durch das Lichtbündel 4 unter einem schrägen Winkel, vorzugsweise unter etwa 45° beleuchtet. Die Reflexion dieses Lichtbündels 4 ist durch das Lichtbündel 5 dargestellt. Zwischen den Lichtbündeln 4 und 5 liegen die Beobachtungsrichtungen 6.1, 6.2 und 6.3, die sich durch die Beobachtungswinkel 7, 8 und 9 von der Hauptstrahlrichtung des Lichtbündels 4 unterscheiden.

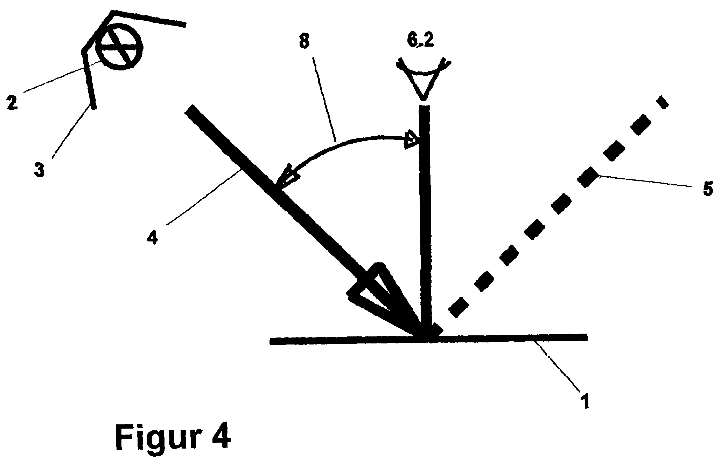

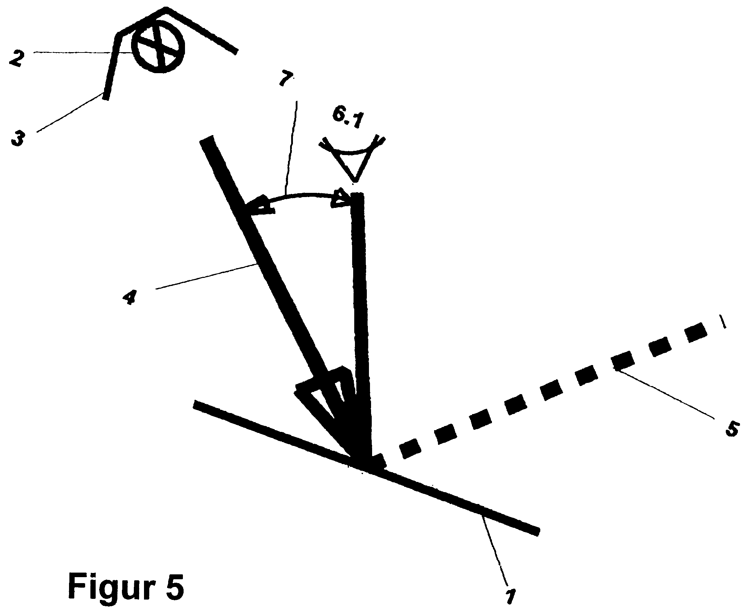

Die Fign. 4, 5 und 6 zeigen die Verhältnisse entsprechend den Fign. 1 und 2 bei immer raumfesten Blickrichtungen 6.2, 6.1 und 6.3 entsprechend der Beobachtungsposition 6 und unterschiedlichen Beobachtungswinkeln 8, 7 und 9, die dadurch eingestellt werden, daß die Beleuchtungseinrichtung bzw. Leuchte 20 gemeinsam mit der Probe 1 in fester Zuordnung zueinander geschwenkt werden.

In dem dargestellten Ausführungsbeispiel nach Fig. 1 und Fig. 2 ist die Beleuchtungseinrichtung in einem als Tischkasten ausgebildeten Gehäuse 15 aufgenommen und strahlt von unten nach oben ab, wobei die Beobachtungsposition 6 sich oberhalb des zur Schwenkung der Beleuchtungseinrichtung benötigen Raum befindet. Selbstverständlich kann das Gehäuse bzw. die Beleuchtungseinrichtung 20 sich oberhalb der Probe 1 befinden, so daß das Lichtbündel 4 schräg von oben nach unten gerichtet ist. Auch ist ein Aufbau des Probenhalters und der Beleuchtungseinrichtung auf einer horizontalen Plattform denkbar, wobei dann die Drehachse der Probe 1 senkrecht stehen würde.

Insgesamt kann gesagt werden, daß die ortsfeste Beziehung zwischen Beobachtungsposition 6 und Probe 1, vorzugsweise der Drehachse 17 der Probe 1 sowie die feste Zuordnung zwischen Probe und Beleuchtungseinrichtung wesentlich ist, wobei Probe und Beleuchtungseinrichtung gemeinsam um die gleiche Drehachse geschwenkt werden, damit unterschiedliche Beobachtungswinkel einstellbar sind. Dabei ist darauf zu achten, daß Blenden die Leuchten bzw. Beleuchtungseinrichtung so abschirmen, daß der Beobachter bzw. ein entsprechendes Meßgerät nicht in die abstrahlende Fläche sieht. Weiterhin soll kein Fremdlicht auf die Probe fallen.

Die Probe 1 kann aus mehreren Probenelementen bestehen, die nebeneinander oder übereinander angeordnet sind, wobei ein Probenelement eine Referenzprobe zum Vergleich mit den übrigen Probenelementen darstellen kann.

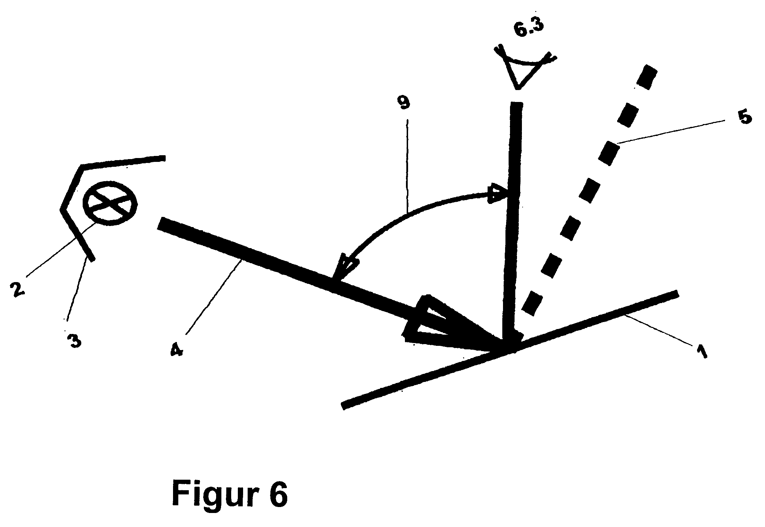

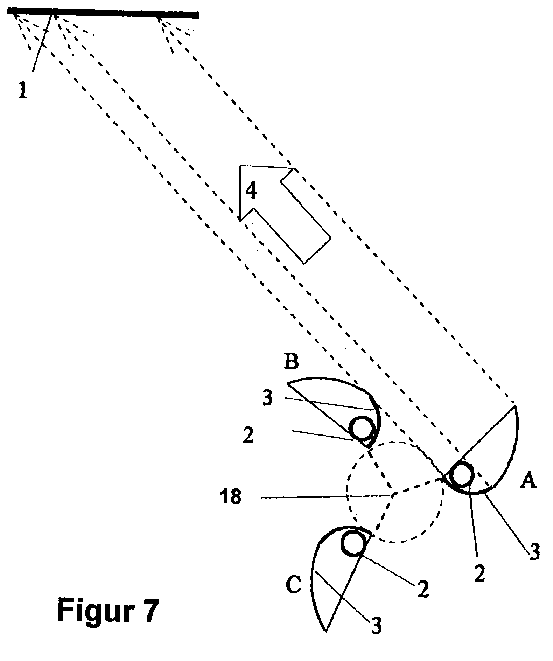

In Fig. 6 und Fig. 7 sind schematisch Beleuchtungseinrichtungen dargestellt, die bei der vorliegenden Erfindung Verwendung finden können. Die Fig. 6 ist eine röhrenförmige Lampe 2 mit einem Rinnenreflektor 3 dargestellt und Lampe und Reflektor bilden eine translationssymmetrische Leuchte 20. Die Leuchten zum Beleuchten der Probe können jedoch auch rotationssymmetrisch gemäß Fig. 7 ausgebildet sein, wobei in Fig. 7 eine Punktlichtquelle vorgesehen ist, die von einem rotationssymmetrischen Reflektor 3 umgeben wird. Beide Reflektoren bestrahlen die Probe mit dem Lichtbündel 4 aus schrägen Richtungen. Es hat sich gezeigt, was eine Leuchtengeometrie gemäß Fig. 6 eine bessere Übereinstimmung mit dem Farbeindruck bei Beobachtung unter freiem Himmel bringt. Die Lampen 2, die sowohl linienförmig bzw. röhrenförmig (z.B. Niederdruckleuchtstofflampen) als auch punktförmig bzw. kompakt ausgebildet sein können, müssen in Zusammenhang mit den Reflektoren 3 und gegebenenfalls Abdeckungen und Filtern (nicht dargestellt) die gewünschten spektralen Verteilungen zur Farbabmusterung besitzen, die bei den unterschiedlichen Sehaufgaben üblicherweise vorgegeben werden. Besonders günstig sind Leuchtstofflampen mit entsprechenden Eigenschaften.

An der Beobachtungsposition 6 kann sowohl ein Beobachter als auch ein Farbmeßgerät vorgesehen sein. Das Farbmeßgerät erfaßt die spektrale Strahldichte der Probe und rechnet daraus gegebenenfalls die Farbörter der farbigen Probe aus.

In den oben beschriebenen Ausführungsbeispielen werden die verschiedenen Beobachtungswinkel durch Schwenken der Beleuchtungseinrichtung 20 zusammen mit der Probe in die Positionen 10, 11 und 12 erzielt. Anstelle der vorgegebenen Positionen kann jedoch eine kontinuierliche Schwenkung zur Ermittlung von Farborten bei kontinuierlich sich verändernden Beobachtungswinkel durchgeführt werden.

In Fig. 7 ist eine Teilansicht eines weiteren Ausführungsbeispiels dargestellt, bei der die Beleuchtungseinrichtung 20 mehrere Leuchten aufweist, die über eine Dreh- oder Schwenkvorrichtung 18 miteinander verbunden sind, derart, daß eine der gewünschten Leuchten jeweils in die Stellung gebracht werden kann, in der die Probe 1 über das Lichtbündel 4 beleuchtet wird. Dabei weisen die Leuchten unterschiedliche spektrale Lichtverteilungen auf, wodurch die Proben unter anderem auf Metamerie untersucht werden können. Die drei verschiedenen Leuchten A, B und C können so mit unterschiedlichen Lampen 2 und gegebenenfalls unterschiedlichen Reflektoren 3 bestückt sein und werden im dargestellten Ausführungsbeispiel durch Drehung über die Drehvorrichtung 18 in die jeweilige Soll-Position gebracht werden.

## Patentansprüche

1. Vorrichtung zur Farbabmusterung oder Farbmessung von farbigen Proben, die in einer Probenhalterung angeordnet sind, mit einer die Probe in einer Hauptstrahlrichtung beleuchtenden Beleuchtungseinrichtung und einem an einer Beobachtungsposition vorgesehenen Beobachter oder einer an einer Beobachtungsposition angeordneten Meßeinrichtung, wobei die Probe und Beobachtungsposition eine ortsfeste Zuordnung zueinander aufweisen,
**dadurch gekennzeichnet,**
daß die Probe (1) und die Beleuchtungseinrichtung (20) in fester Zuordnung zueinander angeordnet sind und daß zur Einstellung unterschiedlicher Beobachtungswinkel zwischen Beobachtungsrichtung von der Beobachtungsposition (6) zur Probe (1) und Hauptstrahlrichtung die Probe (1) und die Beleuchtungseinrichtung (20) um eine gemeinsame Drehachse schwenkbar sind.

2. Vorrichtung nach Anspruch 1, dadurch gekennzeichnet, daß die Probe (1) aus einer Hauptstrahlrichtung von etwa 45° beleuchtet wird und daß die Probe (1) gemeinsam mit der Beleuchtungseinrichtung (20) so drehbar ist, daß bei der ortsfest vorgegebenen Beobachtungsposition alle für die Beurteilung der Probe benötigten Beobachtungswinkel einstellbar sind.

3. Vorrichtung nach Anspruch 1 oder Anspruch 2, dadurch gekennzeichnet, daß die Entfernung zwischen Beleuchtungseinrichtung (20) und Probe (1) kleiner als die Entfernung zwischen Beobachtungsposition (6) und Probe (1) ist.

4. Vorrichtung nach einem der Ansprüche 1 bis 3, dadurch gekennzeichnet, daß die Beleuchtungseinrichtung mindestens eine Lichtquelle und einen Reflektor aufweist, wobei die Lichtquelle linienförmig und die Beleuchtungseinrichtung translationssymmetrisch ausgebildet sind.

5. Vorrichtung nach einem der Ansprüche 1 bis 3, dadurch gekennzeichnet, daß die Beleuchtungseinrichtung mindestens eine Lichtquelle und einen Reflektor aufweist, wobei die Lichtquelle punktförmig und die Beleuchtungseinrichtung rotationssymmetrisch ausgebildet sind.

6. Vorrichtung nach einem der Ansprüche 1 bis 5, dadurch gekennzeichnet, daß die Drehachse, um die die Probe und die Beleuchtungseinrichtung gemeinsam geschwenkt werden, in der Probenfläche oder in unmittelbarer Nähe der Probenfläche angeordnet ist.

7. Vorrichtung nach einem der Ansprüche 1 bis 6, dadurch gekennzeichnet, daß mehrere Proben neben- oder übereinander angeordnet sind.

8. Vorrichtung nach einem der Ansprüche 1 bis 7, dadurch gekennzeichnet, daß die Meßeinrichtung als Farbmeßgerät ausgebildet ist, daß die Spektraldichte der Probe erfaßt und die Farbwörter bestimmt.

9. Vorrichtung nach einem der Ansprüche 1 bis 8, dadurch gekennzeichnet, daß die Beleuchtungseinrichtung mehrere Lichtquellen und Reflektoren aufweisende Leuchten mit unterschiedlichen spektralen Abstrahleigenschaften aufweist, wobei die Leuchten über eine Dreh-Schwenkvorrichtung wahlweise in die zur Beleuchtung der Probe dienenden Position bringbar sind.
